# EUROPÄISCHE PATENTANMELDUNG

(11) **EP 2 450 407 A2**
(43) Veröffentlichungstag der Anmeldung: **09.05.2012**
(21) Anmeldenummer: 11187705.6
(22) Anmeldetag: 03.11.2011
(51) Int. Cl.: C08L 33/06, C08L 69/00, C09D 169/00

(54) **Antidröhnmasse enthaltend Polypropylencarbonat**

(30) Priorität: 08.11.2010 EP 10190353
(71) Anmelder: BASF SE, 67056 Ludwigshafen (DE)
(72) Erfinder: Brym, Anna Katharina, 68163 Mannheim (DE); Steinke, Tobias Heinz, 67346 Speyer (DE); Görtz, Hans-Helmut, 67251 Freinsheim (DE); Weiss, Axel, 67346 Speyer (DE)

(57) **Zusammenfassung**

Die Erfindung betrifft die Verwendung von Polypropylencarbonat zur Herstellung von Antidröhnmassen, die in Form einer Dispersion, einer Lösung oder als Film auf das zu beschichtende Bauteil aufgebracht werden. Die Erfindung betrifft auch entsprechende Antidröhnmassen, welche Polypropylencarbonat enthalten, sowie ein Verfahren zur Dämpfung von Vibrationen oder Schwingungen von Bauteilen von Fahrzeugen.

## Beschreibung

Die Erfindung betrifft die Verwendung von Polypropylencarbonat zur Herstellung von Antidröhnmassen, die in Form einer Dispersion, einer Lösung oder als Film auf das zu beschichtende Bauteil aufgebracht werden. Die Erfindung betrifft auch entsprechende Antidröhnmassen, welche Polypropylencarbonat enthalten, sowie ein Verfahren zur Dämpfung von Vibrationen oder Schwingungen von Bauteilen von Fahrzeugen.

Durch Vibration oder Schwingungen von Bauteilen von Maschinen oder Fahrzeugen werden unerwünschte Geräusche erzeugt. Zur Geräuschminderung können die Bauteile mit sogenannten Antidröhnmassen, auch Liquid Applied Sound Damping genannt, versehen werden. Schwingungsdämpfende Materialien sind beispielsweise in Journal of Materials Science 36 (2001) 5733-5737 beschrieben. Die Ausrüstung von geometrisch komplexen, dreidimensionalen Bauteilen kann durch Aufsprühen einer Antidröhnmasse in Form einer wässrigen Dispersion oder einer Lösung erfolgen. Möglich ist auch das Aufpressen eines eine Antidröhnmasse enthaltenden Films. Derartige Massen enthalten in der Regel ein viskoelastisches Polymer und anorganische Füllstoffe. Die Güte einer Antidröhnmasse kann durch Messung der Biegeschwingungen im Resonanzkurvenverfahren nach ISO 6721-1 und ISO 6721-3 gemessen werden. Ein Maß für die schwingungsdämpfende Wirkung ist der Verlustfaktor tan delta. Bei der Verwendung von Antidröhnmassen auf Basis von viskoelastischen Polymeren ist der Verlustfaktor temperaturabhängig. Es werden Materialien gewünscht, die zu einem möglichst großen Verlustfaktor in dem Temperaturbereich führen, in welchem die Maschinen oder Fahrzeuge üblicherweise betrieben werden, z.B. zwischen 0 und 60 °C.

Aufgabe der vorliegenden Erfindung war es, weitere Materialien zur Verfügung zu stellen mit guten oder verbesserten schwingungsdämpfenden Eigenschaften.

Die bekannten Antidröhnmassen wie beispielsweise Bitumen weisen sowohl hinsichtlich des Verlustfaktors als auch hinsichtlich des Temperaturbereichs, in dem sie als Antidröhnmasse wirksam sind, Nachteile auf. So wäre es für viele Anwendungen interessant den wirksamen Temperaturbereich hin zu höheren Temperaturen zu optimieren.

Polypropylencarbonat ist bisher nicht als Antidröhnmasse beschrieben worden. Überraschenderweise weist es in reiner Form einen respektablen und mit anorganischen Füllstoffen versehen einen hohen Verlustfaktor nach ISO 6721-1 und ISO 6721-3 auf. Gegenstand der vorliegenden Erfindung ist die Verwendung von Polypropylencarbonat zur Herstellung von Antidröhnmassen, die in Form einer Dispersion, einer Lösung oder als Film auf das zu beschichtende Bauteil aufgebracht werden können.

Das Polypropylencarbonat kann analog beispielsweise WO 2003/029325, WO2006/061237 oder WO 2007/125039 durch Copolymerisation von Propylenoxid und Kohlendioxid hergestellt werden.

Die Polypropylencarbonat-Kette kann sowohl Ether- als auch Carbonatgruppen enthalten. Der Anteil an Carbonatgruppen im Polymer ist abhängig von den Reaktionsbedingungen wie insbesondere dem verwendeten Katalysator. In den bevorzugten Polypropylencarbonaten sind mehr als 85 und bevorzugt mehr als 90 % und insbesondere bevorzugt größer 95 % aller Verküpfungen Cabonat-Gruppen. Geeignete Zink- und Kobalt-Katalysatoren sind in US 4789727 und US 7304172 beschrieben. Polypropylencarbonat kann weiterhin analog Soga et al., Polymer Journal, 1981, 13, 407-10 hergestellt werden. Das Polymer ist auch kommerziell erhältlich und wird beispielsweise von Empower Materials Inc. oder Aldrich am Markt angeboten.

Bei der Aufarbeitung des Polypropylencarbonats muss für medizinische oder für Nahrungsmittel zugelassene Anwendungen der Katalysator möglichst quantitativ entfernt werden. Für die erfindungsgemäße Anwendung ist dies nicht notwendig. Das gesamte Verfahren verbilligt sich dadurch deutlich.

Das Molekulargewicht Mn der nach den obengenannten Verfahren hergestellten Polypropylencarbonate beträgt in der Regel 70.000 bis 90.000 Da. Das Molekulargewicht Mw liegt üblicherweise bei 250.000 bis 400.000 Da. Das Verhältnis der Ether- zu Carbonat-Gruppen im Polymer beträgt 5 bis 90%. Zur Verbesserung der Anwendungseigenschaften kann es von Vorteil sein, die Polypropylencarbonate mit MSA, Essigsäureanhydrid, Di- oder Polyisocyanaten, Di- oder Polyoxazoline oder -oxazine oder Di- oder Polyepoxiden zu behandeln. Polypropylencarbonate mit einem Molekulargewicht Mn von 30.000 bis 5.000.000, bevorzugt 35.000 bis 250.000 und insbesondere bevorzugt von 40.000 bis 150.000 Da lassen sich auf diese Weise herstellen.

Polypropylencarbonate mit einem Mn von unter 20.000 Da weisen üblicherweise niedrige Glastemperaturen von unter 20°C auf. Die Polydispersität (Verhältnis von Gewichtsmittel (Mw) zu Zahlenmittel (Mn)) liegt in der Regel zwischen 1 und 80 und vorzugsweise zwischen 2 und 10. Die verwendeten Polypropylencarbonate können bis zu 1 % Carbamat- und Harnstoff-Gruppen enthalten.

Als Kettenverlängerer für die Polypropylencarbonate werden insbesondere MSA, Essigsäureanhydrid, Di- oder Polyisocyanaten, Di- oder Polyoxazoline oder -oxazine oder Di- oder Polyepoxiden eingesetzt. Beispiele für Isocyanate sind Toluylen-2,4-diisocyanat, Toluylen-2,6-diisocyanat, 2,2'-Diphenylmethandiisocyanat, 2,4'-Diphenylmethandiisocyanat, 4,4'-Diphenylmethan-diisocyanat, Naphthylen-1,5-diisocyanat oder Xylylen-diisocyanat und insbesondere 1,6-Hexamethylendiisocyanat, Isophorondiisocyanat oder Methylen-bis(4-isocyanatocyclohexan), verstanden. Besonders bevorzugte aliphatische Diisocyanate sind Isophorondiisocyanat und insbesondere 1,6-Hexamethylendiisocyanat. Als Bisoxazoline seien 2,2'-Bis(2-oxazolin), Bis(2-oxazolinyl)methan, 1,2-Bis(2-oxazolinyl)ethan, 1,3-Bis(2-oxazolinyl)propan oder 1,4-Bis(2-oxazolinyl)butan, insbesondere 1,4-Bis(2-oxazolinyl)benzol, 1,2-Bis(2-oxazolinyl)benzol oder 1,3-Bis(2-oxazolinyl)benzol genannt. Die Kettenverlängerer werden vorzugsweise in Mengen von 0,01 bis 5, bevorzugt 0,05 bis 2, besonders bevorzugt 0,08 bis 1 Gew-%, bezogen auf die Polymermenge eingesetzt.

Setzt man anstelle von Polypropylencarbonat mit einem Polyetheranteil von 1 bis 5 % ein Polypropylencarbonat mit einem Polyetheranteil von 6 bis 25 Gew.-% ein, so sinkt die Glasübergangstemperatur Tg auf bis zu 1 °C ab. Dies hat die folgenden Auswirkungen: Der absolute Wert des Verlustfaktors liegt deutlich niedriger - eher in dem Bereich von Bitumen. Auf der anderen Seite verbreitert sich der Temperaturbereich in dem die Antidröhnmasse mäßige bis gute Schalldämpfungseigenschaften aufweist. Der Polyether fungiert hier als interner Weichmacher. Diese Ausführungsform hat dann Vorteile, wenn eine Antidröhnmasse gesucht ist, die über einen sehr breiten Temperaturbereich wirksam ist.

Die Antidröhnmassen können auch Mischungen von Polypropylencarbonat mit hohem Polycarbonat-Gruppen Anteil und Polypropylencarbonat mit hohem Polyetheranteil enthalten. Somit lässt sich eine Antidröhnmasse herstellen, die im gewünschten Temperaturbereich wirksam ist.

Eine bevorzugte Ausführungsform ist auf Antidröhnmassen gerichtet, die neben Polypropylencarbonat oder den obengenannten Polypropylencarbonat-Mischungen anorganische Füllstoffe enthalten. Durch den Zusatz von anorganischen Füllstoffen lässt sich der Verlustfaktor noch deutlich verbessern.

Vorzugsweise enthält die Antidröhnmasse:
(a) 20 bis 95 Gew.-%, vorzugsweise 50 bis 80 Gew.-% Polypropylencarbonat,
(b) 5 bis 80 Gew.-%, vorzugsweise 20 bis 50 Gew.-% anorganische Füllstoffe,
(c) 0 bis 10 oder 0 bis 5 Gew.%, vorzugsweise 0,1 bis 3 Gew.% Hilfsstoffe.

Geeignete anorganische Füllstoffe sind z.B. Calciumcarbonat, Kaolin, Mica, Silica, Kreide, Mikrodolomit, Quarzmehl, Glimmer, Talk, Ton, Bariumsulfat, Tonerde, Eisenoxid, Titandioxid, Glaspulver, Glasschuppen, Magnesiumcarbonat, Aluminiumhydroxid, Bentonit, Flugasche, Kieselgur und Perlit. Bevorzugt werden schuppenförmige Füllstoffe wie z.B. Mica, ein Glimmer der Fa. Imery eingesetzt, allein oder in Kombination mit gewöhnlichen anorganischen Pigmenten wie Kreide, Kaolin, Mikrodolomit und Quarzmehl. Insbesondere bevorzugt ist Kreide allein oder in Kombination mit Glimmer. Kreide und Glimmer werden üblicherweise in einem Mischungsverhältnis 1:1 eingesetzt. Andere Mischungsverhältnisse sind auch denkbar, verändern aber leicht die Dämpfungseigenschaften der Antidröhnmasse.

Vorzugsweise werden 40 bis 400 oder 50 bis 200 Gewichtsteile anorganischer Füllstoff auf 100 Gewichtsteile Polypropylencarbonat eingesetzt, wobei vorzugsweise 20 bis 200 oder 25 bis 100 Gewichtsteile schuppenförmige Füllstoffe auf 100 Gewichtsteile Polypropylencarbonat eingesetzt werden.

Das Polypropylencarbonat wird mit den anorganischen Füllstoffen vermischt. Hierzu sind alle Techniken zur Herstellung von thermoplastischen Polymeren mit anorganischen Füllstoffen denkbar. Beispielsweise kommt die Mischung in einem Extruder oder auf einer beheizbaren Walze in Frage. In letzterem Verfahren wird das Polymer auf die beheizten, gegeneinanderläufigen Walzenrollen aufgebracht und aufgeheizt. Das Walzfell wird portioniert und in Form gepresst, extrudiert oder spritzgegossen.

In einer weiteren bevorzugten Ausführungsform werden dem Polypropylencarbonat 0,1 bis 20 Gew.-% eines Weichmachers zugesetzt. Unter Weichmachern sind beispielsweise die folgenden Verbindungen zu verstehen: Citrate, Adipate und Succinate wie z.B: Acetyltriethylcitrat, Triacetin (Glycerintriacetat), Diethyladipat, Diethylsuccinat, Malonsäurediethylester und Tributylo-acetylcitrat (1-15%).
Besonders bevorzugt ist Triethylenglykoldiacetat. Durch Zusatz von Weichmachern erzielt man die breiteste Temperaturbereichsabdeckung mit sehr guter Dämpfung. Eine Antidröhnmasse enthaltend 85 Gew.-% Polypropylencarbonat und 15 Gew.-% Triethylenglykoldiacetat zeigt eine sehr gute Dämpfung in einem Temperaturbereich von 10 bis 50°C.

In einer weiteren bevorzugten Ausführungsform wird Polypropylencarbonat in Mischung oder im Mehrschichtverfahren mit anderen Antidröhnmassen eingesetzt. Hierbei kommen alle in der Literatur beschriebenen polymeren Antidröhnmassen wie Gummi, Bitumen, Polytetrafluorethylen, Polyurethan, Polysulfon, Polyimide und Poly(meth)-acrylate oder Mischungen dieser Polymere in Frage.

Besonders effizient sind Antidröhnmassen die Mischungen von Polypropylencarbonat und Poly(meth)acrylat enthalten. Sie können in einem weiten Temperaturbereich Schalldämpfung gewährleisten mit weit höheren Verlustfaktoren als dies Bitumenmatten vermögen.

Insbesondere bevorzugt sind Antidröhnmassen enthaltend a) 20 bis 95 Gew.-% einer Polymermischung mit folgender Zusammensetzung: i) 30 bis 85 Gew.-%, vorzugsweise 30 bis 70 Gew.-% Polypropylencarbonat und ii) 70 bis 15 Gew.-% vorzugsweise 70 bis 30 Gew.-% eines Poly(meth)acrylats sowie b) 5 bis 80 Gew.-% bezogen auf die Polymermischung einen oder mehrere anorganische Füllstoffe.

Anstelle der Mischungen mehrere unterschiedlicher Antidröhnmassen können diese auch in Form von mehreren Schichten, die jeweils eine separate Antidröhnmasse enthalten, vorliegen. Mindestens eine dieser Schichten enthält eine Polypropylencarbonat-haltige Antidröhnmasse. Besonders bevorzugt ist ein Mehrschichtaufbau, wobei mindestens eine Schicht eine Polypropylencarbonat-haltige Antidröhnmasse, und mindestens eine weitere Schicht eine Poly(meth)acrylat-haltige Antidröhnmasse enthält.

Poly(meth)acrylat-haltige Antidröhnmasse, wie wäßrige Dispersionen dieser Antidröhnmassen, werden beispielsweise in der EP Anm. Nr. 10173414.3 und EP Anm. Nr. 10170428.6 beschrieben.

Insbesondere geeignet sind wässrige Poly(meth)acrylat-dispersionen, die durch Emulsionspolymerisation gewonnen werden.

Bei den durch Emulsionspolymerisation hergestellten Polymeren handelt es sich um Polymere, die durch radikalische Polymerisation von ethylenisch ungesättigten Verbindungen (Monomeren) erhältlich sind. Das Polymer besteht vorzugsweise zu mindestens 40 Gew.% oder zu mindestens 60 Gew.%, oder zu mindestens 80 Gew.%, besonders bevorzugt zu mindestens 90 Gew.% oder zu 100 Gew.% aus einem oder mehreren der nachfolgend beschriebenen Hauptmonomeren. Die Hauptmonomeren sind vorzugsweise ausgewählt aus C1 bis C20 Alkyl(meth)acrylaten, Vinylestern von bis zu 20 C-Atome enthaltenden Carbonsäuren, Vinylaromaten mit bis zu 20 C-Atomen, ethylenisch ungesättigten Nitrilen, Vinylhalogeniden, Vinylethern von 1 bis 10 C Atome enthaltenden Alkoholen, aliphatischen Kohlenwasserstoffen mit 2 bis 8 C Atomen und ein oder zwei Doppelbindungen oder Mischungen dieser Monomeren.

Art und Menge der Monomeren sind vorzugsweise derart, dass die Glasübergangstemperatur des durch Emulsionspolymerisation hergestellten Polymers im Bereich von -60 °C bis kleiner oder gleich 70 °C oder im Bereich von -30 °C bis kleiner oder gleich 60 °C liegt, besonders bevorzugt im Bereich von -15 bis 50°C. Die Glasübergangstemperatur lässt sich bestimmen durch Differential Scanning Calorimetrie (ASTM D 3418-08, sog. "midpoint temperature").

Geeignete Monomere sind z.B. (Meth)acrylsäurealkylester mit einem C₁-C₁₀-Alkylrest, wie Methylmethacrylat, Methylacrylat, n-Butylacrylat, Ethylacrylat und 2-Ethylhexylacrylat. Insbesondere sind auch Mischungen der (Meth)acrylsäurealkylester geeignet. Vinylester von Carbonsäuren mit 1 bis 20 C-Atomen sind z.B. Vinyllaurat, Vinylstearat, Vinylpropionat, Versaticsäurevinylester und Vinylacetat. Als vinylaromatische Verbindungen kommen Vinyltoluol, alpha- und para-Methylstyrol, alpha-Butylstyrol, 4-n-Butylstyrol, 4-n-Decylstyrol und vorzugsweise Styrol in Betracht. Beispiele für Nitrile sind Acrylnitril und Methacrylnitril. Die Vinylhalogenide sind mit Chlor, Fluor oder Brom substituierte ethylenisch ungesättigte Verbindungen, bevorzugt Vinylchlorid und Vinylidenchlorid. Als Vinylether zu nennen sind z.B. Vinylmethylether oder Vinylisobutylether. Bevorzugt sind Vinylether von 1 bis 4 C-Atome enthaltenden Alkoholen. Geeignete Kohlenwasserstoffe mit 4 bis 8 C-Atomen und zwei olefinischen Doppelbindungen sind z.B. Butadien, Isopren und Chloropren.

Als Hauptmonomere bevorzugt sind C₁- bis C₁₀-Alkylacrylate und C₁- bis C₁₀-Alkylmethacrylate, insbesondere C₁- bis C₈-Alkylacrylate und -methacrylate und Vinylaromaten, insbesondere Styrol und deren Mischungen. Ganz besonders bevorzugt sind Methylacrylat, Methylmethacrylat, Ethylacrylat, n-Butylacrylat, n-Hexylacrylat, Octylacrylat und 2-Ethylhexylacrylat, 2-Propylheptylacrylat, Styrol sowie Mischungen dieser Monomere. Insbesondere sind die Polymere zu mindestens 60 Gew.%, besonders bevorzugt zu mindestens 80 Gew.% und ganz besonders bevorzugt zu mindestens 90 oder zu mindestens 95 Gew.% aus C₁ bis C₁₀ Alkyl(meth)acrylaten aufgebaut.

Neben den Hauptmonomeren kann das Polymer weitere Monomere enthalten, z.B. ethylenisch ungesättigte Monomere mit Carbonsäure-, Sulfonsäure- oder Phosphonsäuregruppen (Säuremonomere). Bevorzugt sind Carbonsäuregruppen. Genannt seien z. B. Acrylsäure, Methacrylsäure, Itaconsäure, Maleinsäure oder Fumarsäure. Vorzugsweise ist das durch Emulsionspolymerisation hergestellte Polymer aber frei von Säuregruppen.

Weitere Monomere sind z.B. auch Hydroxylgruppen enthaltende Monomere, insbesondere C₁-C₁₀-Hydroxyalkyl(meth)acrylate oder (Meth)acrylamid. Als weitere Monomere seien darüber hinaus Phenyloxyethylglykolmono-(meth)acrylat, Glycidyl(meth)acrylat, Aminoalkyl(meth)acrylate wie z.B. 2-Aminoethyl-(meth)acrylat genannt. Alkylgruppen weisen vorzugsweise von 1 bis 20 C-Atome auf. Als weitere Monomere seien auch vernetzende Monomere genannt.

Insbesondere ist das Polymer zu mindestens 60 Gew.-%, besonders bevorzugt zu mindestens 80 Gew.-%, z.B. von 60 bis 100 Gew.%, und ganz besonders bevorzugt zu mindestens 95 Gew.-% oder zu 100 Gew.% aus mindestens einem C₁ bis C₂₀ Alkylacrylat, mindestens einem C₁ bis C₂₀ Alkylmethacrylat, deren Gemisch oder deren Gemisch mit Styrol aufgebaut.

Die Herstellung der Polymere kann durch Emulsionspolymerisation erfolgen, es handelt sich dann um ein Emulsionspolymerisat. Bei der Emulsionspolymerisation werden in der Regel ionische und/oder nicht-ionische Emulgatoren und/oder Schutzkolloide bzw. Stabilisatoren als grenzflächenaktive Verbindungen verwendet, um die Dispergierung der Monomeren in dem wässrigen Medium zu unterstützen. Erfindungsgemäß können ein oder mehrere der oben genannten Schutzkolloide als einziges Dispergiermittel eingesetzt werden, d.h. ohne einen Zusatz von Emulgatoren. Falls gewünscht, können aber auch geringe Mengen an Emulgatoren mitverwendet werden. Vorzugsweise erfolgt die Emulsionspolymerisation in Gegenwart mindestens eines Schutzkolloids ohne Zusatz eines nicht-polymeren Emulgators.

Falls Emulgatoren als zusätzliche grenzflächenaktive Substanzen eingesetzt werden, so handelt es sich vorzugsweise um anionische oder nichtionische Emulgatoren.

Bei der Emulsionspolymerisation werden wässrige Dispersionen des Polymeren in der Regel mit Feststoffgehalten von 15 bis 75 Gew.-%, bevorzugt von 20 bis 45 Gew.-% erhalten. Für eine hohe Raum/Zeitausbeute des Reaktors sind Dispersionen mit einem möglichst hohen Feststoffgehalt bevorzugt. Um Feststoffgehalte > 60 Gew.-% erreichen zu können, sollte man eine bi-oder polymodale Teilchengröße einstellen, da sonst die Viskosität zu hoch wird, und die Dispersion nicht mehr handhabbar ist. Die Erzeugung einer neuen Teilchengeneration kann beispielsweise durch Zusatz von Saat (EP 81083), durch Zugabe überschüssiger Emulgatormengen oder durch Zugabe von Miniemulsionen erfolgen. Ein weiterer Vorteil, der mit der niedrigen Viskosität bei hohem Feststoffgehalt einhergeht, ist das verbesserte Beschichtungsverhalten bei hohen Feststoffgehalten. Die Erzeugung einer neuen/neuer Teilchengeneration/en kann zu einem beliebigen Zeitpunkt erfolgen. Er richtet sich nach der für eine niedrige Viskosität angestrebten Teilchengrößenverteilung.

Die Antidröhnmassen können auch Hilfsstoffe enthalten. Hilfsstoffe, die vorzugsweise zu mindestens 0,1 Gew.%, z.B. von 0,2 bis 5 Gew.% eingesetzt werden sind z.B. Verdickungsmitteln, Harze, organische und anorganische Pigmente, Cosolventien, Stabilisatoren, Benetzungsmittel, Konservierungsstoffe, Schauminhibitoren, Glas- oder Kunststoffperlen, Glas- oder Kunststoffhohlkörper, Gefrierschutzmittel, Dispergiermittel, Antioxidantien, UV-Absorber und Antistatika. Von den Hilfsstoffen können eines, zwei oder mehrere in Kombination eingesetzt werden. Geeignete Cosolventien sind z.B. Ethylenglykol, Ethylenglykolalkylether (z.B. Cellosolve®-Typen), Diethylenglykolalkylether (z.B. Carbitol®-Typen), Carbitolacetat, Butylcarbitolacetat oder deren Mischungen. Verdickungsmittel sind z.B. Polyvinylalkohole, Cellulosederivate oder Polyacrylsäuren in Mengen von z.B. 0,01 bis 4 oder von 0,05 bis 1,5 oder von 0,1 bis 1 Gewichtsteilen, bezogen auf 100 Gewichtsteile Feststoff. Dispergiermittel sind z.B. Natriumhexametaphosphat, Natriumtripolyphosphate, oder Polycarbonsäuren. Gefrierschutzmittel sind z.B. Ethylenglykol oder Propylenglykol. Schauminhibitoren sind z.B. Silikone. Stabilisatoren sind z.B. polyvalente Metallverbindungen wie Zinkoxid, Zinkchlorid oder Zinksulfat.

Das Maximum des Verlustfaktors tan delta liegt bei erfindungsgemäßen Antidröhnmassen vorzugsweise im Bereich von - 30 bis 70°C und insbesondere im Bereich von 10 bis 60°C.

Gegenstand der Erfindung ist auch ein Verfahren zur Dämpfung von Vibrationen oder Schwingungen von Bauteilen von Fahrzeugen, wobei eine Mischung enthaltend
(1) Polypropylencarbonat, und
(2) eine weitere Antidröhnmasse ausgewählt aus der Gruppe bestehend aus: Polypropylencarbonat mit anorganischen Füllstoffen wie Kreide und Glimmer und auch mit Weichmachern versehenen Varianten oder aus der Literatur bekannten Antidröhnmassen wie Gummi, Bitumen, Polytetrafluorethylen, Polyurethan, Polysulfon, Polyimide und insbesondere Poly(meth)acrylate oder Mischungen dieser Polymere
auf ein Bauteil eines Fahrzeuges aufgebracht und getrocknet wird.

Das Aufbringen kann auf übliche Art erfolgen, z.B. durch Streichen, Rollen oder Sprühen der Dispersion oder Lösung oder durch Aufpressen der Polymerfilme. Die aufgebrachte Menge ist vorzugsweise von 1 bis 7 kg/m² oder von 2 bis 6 kg/m² nach Trocknen. Das Trocknen kann bei Umgebungstemperatur oder vorzugsweise durch Anwendung von Wärme erfolgen. Die Trocknungstemperaturen sind vorzugsweise von 80 bis 210°C oder von 90 bis 180 °C oder von 120 bis 170 °C.

Die Antidröhnmasse kann beispielsweise angewendet werden in Fahrzeugen aller Art, insbesondere Straßenkraftfahrzeugen, Automobilen, Schienenfahrzeugen aber auch in Schiffen, Flugzeugen, elektrischen Maschinen, Baumaschinen und Gebäuden.

Die erfindungsgemäß in Antidröhnmassen verwendeten Polymerdispersionen haben gute anwendungstechnische Eigenschaften hinsichtlich guter Auftragbarkeit und guten schwingungsdämpfenden Eigenschaften.

### Beispiele

### Beispiel 1:

### Herstellung des gefüllten Polypropylencarbonats

Das Polypropylencarbonat PPC-i wurde analog Beispiel 4, WO 2006/061237 (Tg = 20°C) bzw. PPC-ii wurde analog Beispiel 1, WO 2006/061237 (Tg = 35°C) hergestellt und in Granulatform auf die beheizten (100 - 200 °C) gegeneinanderläufigen Walzenrollen aufgebracht und aufgeheizt. Anschließend wurde portionsweise eine Mischung aus Kreide und Glimmer in einem Mischungsverhältnis von 50 zu 50 Gewichtsprozent dazugegeben und 5 bis 30 Min gewalzt. Das Walzfell wurde portioniert.

Der Polymeranteil wurde wie in Tabelle 1 aufgeführt variiert.

**Tabelle 1:**

| Beispiel | PPC-i [Gew.-%] | PPC-ii [Gew.-%] | andere Antidröhnmasse [Gew.-%] | Füllstoff Kreide/Glimmer 50/50 [Gew.-%] | Weichmacher Triethylenglykoldiacetat [Gew.-%] |
|---|---|---|---|---|---|
| 1a | | 100 | | | |
| 1b | | 70 | | 30 | |
| 1c | | 85 | | 15 | |
| 1d | | 59.5 | | 30 | 10.5 |
| 1e | 70 | | | 30 | |
| 1f | 28 | 42 | | 30 | |
| | | | | | |
| V1 | | | Bitumen 100 | | |
| V2 | | | Acronal® DS 3502 70 | 30 | |

### Anwendungstechnische Prüfung

Zur Beurteilung des Schwingungungsdämpfungsverhaltens wurde der Verlustfaktor tan delta bei XT (°C) wie in WO 2007/034933 beschrieben (analog ISO 6721-1 und ISO 6721-3) gemessen. Hierzu wurde ein Prüfkörper aus Stahlblech einer Größe von 30 x 300 x 1,6 mm mit der zu testenden Antidröhnmasse beschichtet und getrocknet.
Die Beschichtungsmenge ist ca. 3.0 kg pro m².

Die Ergebnisse sind in Tabelle 2 zusammengefasst.

**Tabelle 2:**

| Beispiel | Verlustfaktor tan delta bei 20°C | Verlustfaktor tan delta bei 30°C | Verlustfaktor tan delta bei 40°C | Verlustfaktor tan delta bei 50°C |
|---|---|---|---|---|
| 1a | 0.05 | 0.13 | 0.22 | 0.05 |
| 1b | 0.02 | 0.03 | 0.1 | 0.31 |
| 1c | 0.02 | 0.03 | 0.1 | 0.25 |
| 1d | 0.13 | 0.19 | 0.15 | 0.05 |
| 1e | 0.09 | 0.11 | 0.15 | 0,05 |
| 1f | 0.02 | 0.04 | 0.12 | 0.22 |
| | | | | |
| V1 | 0.13 | 0.1 | 0.07 | 0,05 |
| V2 | 0.21 | 0.13 | 0.07 | 0,05 |

Die Messergebnisse zeigen, dass sich insbesondere gefülltes Polypropylencarbonat siehe Beispiele 1b und 1c) hervorragend als Antidröhnmasse eignet. Im Vergleich zum ungefüllten PPC (1a) und zu den Vergleichsprodukten V1 und V2 ist allerdings der Antidröhneffekt zu höheren Temperaturen verschoben. Gefülltes Polypropylencarbonat eignet sich damit insbesondere in Mischung oder Kombination mit V1 und V2 als Antidröhnmasse. Interessanterweise lässt sich durch die Zugabe von Weichmachern (Beispiel 1 d) oder durch die Erhöhung des Polyetheranteils im Polypropylencarbonat (Beispiel 1e) die Antidröhnwirkung wieder zu tieferen Temperaturen verschieben. Beispiele 1 d und 1 e zeigen weiterhin, dass die Antidröhnwirkung über einen sehr großen Temperaturbereich ausgedehnt werden kann.

## Patentansprüche

1. Verwendung von Polypropylencarbonat zur Herstellung von Antidröhnmassen, die in Form einer Dispersion, einer Lösung oder als Film auf das zu beschichtende Bauteil aufgebracht werden.

2. Verwendung nach Anspruch 1, wobei das Polypropylencarbonat 5 bis 80 Gew.-% bezogen auf den Feststoffgehalt eines anorganischen Füllstoffs enthält.

3. Verwendung nach Anspruch 2, wobei der anorganische Füllstoff ausgewählt ist aus der Gruppe bestehend aus Kaolin, Kreide, Mikrodolomit, Quarzmehl und Glimmer.

4. Verwendung nach den Ansprüchen 1 bis 3, wobei 0,1 bis 20 Gew.-%, bezogen auf das Polypropylencarbonat, eines Weichmachers zugesetzt wird.

5. Verwendung nach Anspruch 1, wobei ein Polypropylencarbonat mit einem Polyetheranteil von 6 bis 25 Gew.- % eingesetzt wird.

6. Verwendung nach den Ansprüchen 1 bis 5, wobei Polypropylencarbonat in Mischung oder im Mehrschichtverfahren mit anderen Antidröhnmassen eingesetzt wird.

7. Antidröhnmassen enthaltend:
a) 20 bis 95 Gew.-% einer Polymermischung aus:
i) 30 bis 85 Gew.-% Polypropylencarbonat und
ii) 70 bis 15 Gew.-% Poly(meth)acrylat sowie
b) 5 bis 80 Gew.-% einen oder mehrere anorganische Füllstoffe.

8. Verfahren zur Dämpfung von Vibrationen oder Schwingungen von Bauteilen von Fahrzeugen in mehreren Schichten, wobei mindestens eine Schicht eine Poly-propylencarbonat-haltige Antidröhnmasse und mindestens eine weitere Schicht eine Poly(meth)acrylathaltige Antidröhnmasse enthält.

9. Verfahren zur Dämpfung von Vibrationen oder Schwingungen von Bauteilen von Fahrzeugen mittels polymerer Antidröhnmassen-Mischungen, die neben Polypropylencarbonat noch Poly(meth)acrylat-haltige oder Bitumen-haltige Antidröhnmassen enthalten.

10. Verfahren zur Dämpfung von Vibrationen oder Schwingungen von Bauteilen von Fahrzeugen mittels polymerer Antidröhnmassen gemäß Anspruch 7.
